# FASCICULE DE BREVET EUROPEEN

(11) **EP 3 142 916 B1**
(45) Date de publication et mention de la délivrance du brevet: **02.01.2019**
(21) Numéro de dépôt: 15718560.4
(22) Date de dépôt: 09.04.2015
(51) Int. Cl.: B62D 21/15, B60K 1/00, B62D 21/11

(54) **FIXATION À RUPTURE PROGRAMMÉE DU BERCEAU MOTEUR AU PLANCHER D'UN VÉHICULE**
PROGRAMMIERTE LÖSBARE MITTEL ZUR BEFESTIGUNG DES MOTORTRÄGERS AN DEN BODEN EINES FAHRZEUGS
PROGRAMMED RELEASABLE MEANS FOR FASTENING THE ENGINE CRADLE TO THE FLOOR OF A VEHICLE

(30) Priorité: 14.05.2014 FR 1454291
(43) Date de publication de la demande: 22.03.2017
(73) Titulaire: PSA Automobiles SA, 78300 Poissy (FR)
(72) Inventeur: ZEITOUNI, Richard, F-78390 Bois d'Arcy (FR); PERU, Marc, F-92290 Chatenay-Malabry (FR); BOISGARD, Vincent, F-78860 Saint Nom LaBreteche (FR); PICQUET, Christophe, F-78000 Versailles (FR)
(86) Numéro de dépôt international: PCT/FR2015/050960
(87) Numéro de publication internationale: WO 2015/173484

(56) Documents cités:
- EP-A1- 0 602 331
- WO-A1-2013/172126
- FR-A1- 2 440 304
- FR-A1- 2 980 437
- US-A- 5 605 353
- US-A1- 2005 077 754
- US-A1- 2011 198 832

## Description

L'invention a trait à l'absorption de chocs à l'avant d'un véhicule automobile. Plus particulièrement, l'invention a trait à une structure avant de véhicule ainsi qu'à un véhicule apte à absorber des chocs avant.

Un système ou dispositif d'absorption de chocs avant pour véhicule est classiquement constitué d'une poutre transversale fixée aux extrémités avant de brancards via des « crashboxes ». Les brancards sont deux profilés de la structure avant du véhicule s'étendant dans le prolongement du plancher du véhicule vers le compartiment avant du véhicule.

Le système d'absorption de chocs avant est aussi classiquement constitué des éléments du compartiment avant situés en arrière de la poutre transversale ; ces éléments, comme le groupe motopropulseur, le train avant et le berceau moteur, participant à l'absorption d'énergie par un phénomène d'empilage en cas de choc avant. Ces éléments, généralement liés entre eux et étant classiquement fixés aux brancards, participent particulièrement en cas de chocs avant à plus haute vitesse et lors du recul du groupe motopropulseur intervenant généralement après la déformation des « crashboxes ».

Un dispositif d'absorption de chocs avant pour véhicule doit satisfaire à de nombreuses prestations, notamment des tests de choc frontal.

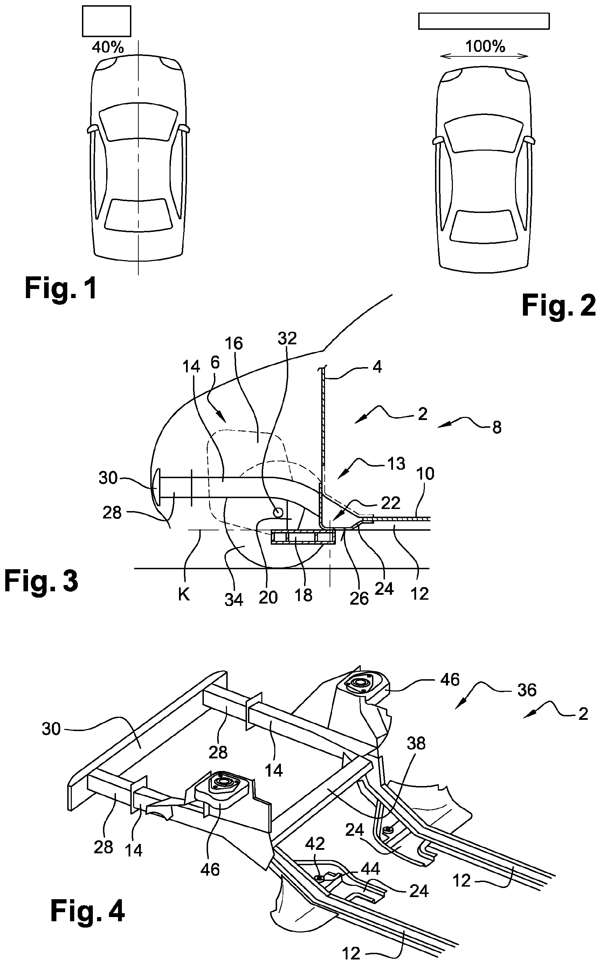

Parmi ces tests, on compte un test de choc frontal à 64 km/h avec recouvrement partiel contre une barrière composée d'une structure complexe qui représente la déformation «théorique» d'un bloc avant de voiture venant en sens inverse. Elle se compose notamment de panneaux en nid d'abeille. La figure 1 illustre ce test de choc. Le protocole est celui qui est utilisé actuellement par l'organisme European New Car Assessment Program (Euro NCAP). Ce test est à satisfaire aussi bien du côté gauche que du côté droit.

Un nouveau protocole de choc frontal à 50 km/h avec 100% de recouvrement contre un mur rigide est en préparation. Il est susceptible d'être introduit dans le protocole Euro NCAP d'ici 2015. Ce test est illustré à la figure 2.

Il est donc souhaitable de satisfaire à ces deux protocoles de choc frontal.

A l'occasion du choc décalé à 40%, un seul côté du véhicule heurte l'obstacle et l'obstacle est par ailleurs déformable. Le fait de devoir absorber toute l'énergie du choc sur le seul côté impacté accentue le risque d'intrusions à l'intérieur de l'habitacle de ce côté. En revanche, la déformation de la barrière filtre la décélération subie par le véhicule, que l'on peut traiter avec les moyens de retenue des occupants selon l'état de la technique.

A l'occasion d'un choc sans décalage sur un mur rigide, les deux côtés du véhicule travaillent de manière simultanée. L'énergie du choc est plus rapidement absorbée du fait de la raideur double représentée par les deux côtés du véhicule. De plus, l'impact est contre un mur rigide. La décélération subie par le véhicule est donc plus importante. La protection biomécanique des occupants est donc dégradée. Il est reconnu que cette dégradation est particulièrement aggravée en fin de choc où l'occupant est généralement lié physiquement au véhicule et subit directement la décélération du véhicule. La difficulté avec ce protocole se concentre donc essentiellement sur la loi de décélération du véhicule, et plus particulièrement sur la phase finale de cette loi.

Il est connu d'utiliser des moyens de retenue d'occupants de véhicule, tels que des coussins gonflables ou bien des ceintures pyrotechniques qui soient plus performants de manière à limiter la décélération ressentie par l'occupant, selon les étapes du choc ; ces moyens sont en revanche onéreux.

Le document de brevet FR 2983271 B1 divulgue une fixation à rupture programmée. Cette rupture est réalisée à l'occasion de choc frontal par l'activation de charges pyrotechniques destinées à déclencher le déplacement de moyens pour rompre la fixation par un impact. Cet enseignement est intéressant en ce que le moyen de fixation à rupture programmée, présenté comme réalisé notamment entre le groupe motopropulseur et le berceau moteur, permet d'éviter un niveau de décélération excessif du véhicule. L'enseignement se limite en revanche à un cadre dans lequel l'activation du moyen de rupture est réalisée selon un seuil de décélération maximale du véhicule, sans plus de précisions en ce qui concerne le moment auquel celui-ci se produit.

L'invention a pour objectif de proposer une solution d'absorption de chocs avant pour véhicule qui puisse satisfaire aux deux tests susmentionnés, plus particulièrement au test de choc frontal avec recouvrement à 40% sur un obstacle déformable et au test de choc frontal avec recouvrement total sur obstacle rigide. Plus particulièrement l'invention a pour objectif de proposer une solution palliant au moins un des désavantages de l'état de la technique mentionné ci-dessus, et qui soit d'un concept simple, et enfin qui soit économique.

L'invention a pour objet une structure de véhicule automobile, comprenant : un plancher ; un berceau moteur avec une partie arrière fixée au plancher via des moyens de fixation, remarquable en ce que les moyens de fixation arrière sont des moyens de fixation à rupture configurés pour rompre en cas d'impact frontal, permettant audit berceau de se déplacer vers l'arrière le long dudit plancher.

Une telle structure correspond au préambule de la revendication 1, et est divulguée par le document publié US2005/077754A1. Selon un mode avantageux de l'invention, les moyens de fixation à rupture sont du type vis-écrou, ils comprennent une vis et/ou un pion avec un filetage intérieur. Selon un mode avantageux de l'invention, les moyens de fixation à rupture s'étendent essentiellement verticalement et comprennent une ou plusieurs zones d'affaiblissement apte(s) à favoriser une rupture en cisaillement.

Selon un mode avantageux de l'invention, la ou les zones d'affaiblissement des moyens de fixation à rupture comprend/comprennent une gorge circulaire, ladite gorge s'étendant préférentiellement sur toute la circonférence desdits moyens. Selon un mode avantageux de l'invention, les zones d'affaiblissement se situent, selon une direction verticale, au niveau d'un plan de liaison entre la face inférieure du plancher, ou d'une pièce de liaison avec le plancher, et la face supérieure du berceau.

Selon l'invention, les moyens de fixation à rupture comprennent au moins un pion rigidement fixé au plancher ou à une pièce de liaison fixée au plancher, ledit pion comprenant une portion généralement circulaire destinée au centrage du berceau, la portion de centrage du pion traversant préférentiellement un orifice dans le plancher ou dans la pièce de liaison fixée au plancher.

Selon un mode avantageux de l'invention, la portion de centrage du pion comprend une gorge extérieure annulaire formant une zone d'affaiblissement.

Selon un mode avantageux de l'invention, la gorge annulaire a une largeur et/ou une profondeur comprise entre 2mm et 5mm.

Selon un mode avantageux de l'invention, le pion forme un épaulement en appui sur la face intérieure du plancher ou de la pièce de liaison.

Selon un mode avantageux de l'invention, la gorge est à une distance de l'épaulement comprise préférentiellement entre 2mm et 7mm.

Selon un mode avantageux de l'invention, le pion comprend un filetage intérieur, les moyens de fixation comprenant également une vis engageant avec ledit filetage, ladite vis étant préférentiellement vierge de zone d'affaiblissement.

Selon un mode avantageux de l'invention, le pion comprend un passage de vis avec une portion non filetée.

Avantageusement, la portion non filetée s'étend sur une longueur comprise préférentiellement entre 20% et 60% de la longueur du pion de centrage.

Selon un mode avantageux de l'invention, la partie arrière du berceau est fixée au plancher de chaque côté, latéralement, dudit berceau.

L'invention a également pour objet un véhicule automobile comprenant : une structure avec un plancher et un berceau moteur fixé audit plancher ; un groupe motopropulseur fixé au berceau moteur, remarquable en ce que la structure est conforme à l'invention, les moyens de fixation arrière à rupture étant configurés pour rompre en cas de choc frontal à recouvrement total et à 50 km/h sur un obstacle fixe et pour ne pas rompre en cas de choc frontal à recouvrement compris entre 30% et 50% et à 64 km/h sur un obstacle déformable.

Selon un mode avantageux de l'invention, les moyens de fixation à rupture sont configurés pour une rupture en phase finale de choc frontal à recouvrement total. Selon un mode avantageux de l'invention, les moyens de fixation arrière du berceau moteur sont situés à une distance de l'axe longitudinal du véhicule qui est comprise entre 5% et 50% de la largeur du plancher du véhicule, préférentiellement entre 10% et 30%.

D'autres caractéristiques et avantages de la présente invention seront mieux compris à l'aide de la description et des dessins parmi lesquels :
- La figure 1 illustre les conditions de test de choc frontal à 64 km/h, avec 40% de recouvrement contre un obstacle déformable ;
- La figure 2 illustre les conditions de test de choc frontal à 50 km/h avec 100% de recouvrement contre un obstacle rigide ;
- La figure 3 est une vue simplifiée en coupe longitudinale d'un véhicule comprenant une structure conforme à l'invention ;
- La figure 4 est une vue simplifiée en perspective des profilés structurels de la structure de la figure 3 ;
- La figure 5 est une vue simplifiée du berceau moteur de la figure 3 ;
- La figure 6 est une vue simplifiée en coupe longitudinale d'une fixation à rupture entre le berceau moteur et le plancher de la structure de la figure 3 ;
- La figure 7 est une vue du pion de fixation du berceau moteur des figures 3, 5 et 6 conforme à l'invention ;
- La figure 8 est une vue en coupe longitudinale du véhicule de la figure 3, à un stade intermédiaire de déformation en cas de choc avant à recouvrement total ;
- La figure 9 est une vue en coupe longitudinale du véhicule de la figure 3, à un stade final de déformation en cas de choc avant à recouvrement total ;

Les figures 1 et 2 représentent deux types de choc frontal d'un véhicule et ont déjà été décrites précédemment dans le cadre de la discussion de l'art antérieur. De tels chocs frontaux nécessitent que le véhicule soit réalisé avec une structure apte à éviter l'intrusion des éléments du compartiment avant du véhicule dans l'habitacle. La remontée de la colonne de direction ou le recul du tableau de bord sont des exemples d'une telle intrusion à éviter.

La figure 3 est une vue simplifiée en coupe longitudinale d'une structure avant 2 d'un véhicule conforme à l'invention. On peut voir le tablier 4 de la structure 2 qui forme le lien entre le compartiment avant 6 et l'habitacle 8. La structure 2 du véhicule comprend dans sa portion arrière un plancher 10 situé dans le prolongement arrière du tablier 4.

La structure 2 comprend des profilés structurels longitudinaux 13, se déclinant vers l'avant en brancards 14 et vers l'arrière en longerons 12. Le plancher 10 est soutenu par les deux longerons 12. Les longerons 12 se prolongent en brancards 14 dans le compartiment avant 6 de façon à soutenir le groupe motopropulseur 16. La structure 2 dans sa partie arrière comprend également un berceau moteur 18 fixé sous le plancher 10 par l'arrière ainsi qu'aux brancards 14 par l'avant. On peut voir les moyens d'entretoisement avant 20 du berceau moteur 18, ou « cornes de berceau », liant le berceau aux brancards. La partie inférieure du groupe motopropulseur 16 est également fixée au berceau moteur 18.

La structure 2 comprend également des moyens de fixation arrière 22 entre le berceau 18 et le plancher 10 présentés ci-dessus, ces moyens de fixation arrière étant à rupture programmée. La fixation du berceau 18 au plancher 10 peut être réalisée via des pièces de liaison 24 configurées de façon à ce que le berceau 18 puisse se déplacer vers l'arrière le long dudit plancher 10 après rupture des moyens de fixation 22. Dans un mode préféré de réalisation, une ou plusieurs pièces de liaison 24, à titre d'exemple sous forme d'embouti peut/peuvent être fixée(s) au plancher 10 et/ou aux longerons 12, par vis ou par soudure. On peut voir la surface inférieure 26 d'une pièce de liaison 24 faisant interface entre le berceau 18 et le plancher 10 ; cette surface 26 est sensiblement horizontale en alignement avec la face supérieure de la partie arrière du berceau 18 et permet ce déplacement en cas de rupture. En l'occurrence les pièces de liaison 24 sont situées au niveau de portions inclinées des longerons 12, en faisant saillie par le bas à l'extérieur des longerons. On peut voir à l'avant de la structure, les profilés déformables 28, ou « crashboxes », ainsi que la traverse avant 30.

Les moyens de fixation à rupture 22 sont réalisés pour rompre en cas d'impact frontal du véhicule ; la rupture de ces moyens de fixation 22 étant destinée à se produire en cours de déformation. Plus précisément, la rupture des moyens de fixation 22 est destinée à se passer au moment où une raideur excessive de la structure 2 peut être néfaste à l'occupant du véhicule.

La figure 3 présente un véhicule conforme à l'invention et comprenant dans son compartiment avant 6 un groupe motopropulseur 16 lié au berceau moteur 18, les moyens de fixation à rupture 22 conforme à l'invention étant, encore plus précisément, configurés pour rompre en cas de choc frontal, à recouvrement total sur un obstacle fixe, du véhicule lancé à 50km/h ; et pour ne pas rompre en cas de choc frontal, à recouvrement compris entre 30% et 50% sur un obstacle déformable, du véhicule lancé à 64km/h. On peut voir également un train de roues avant 32 agencé dans le compartiment avant 6, une seule roue 34 de ce train 32 étant représentée pour des raisons de clarté.

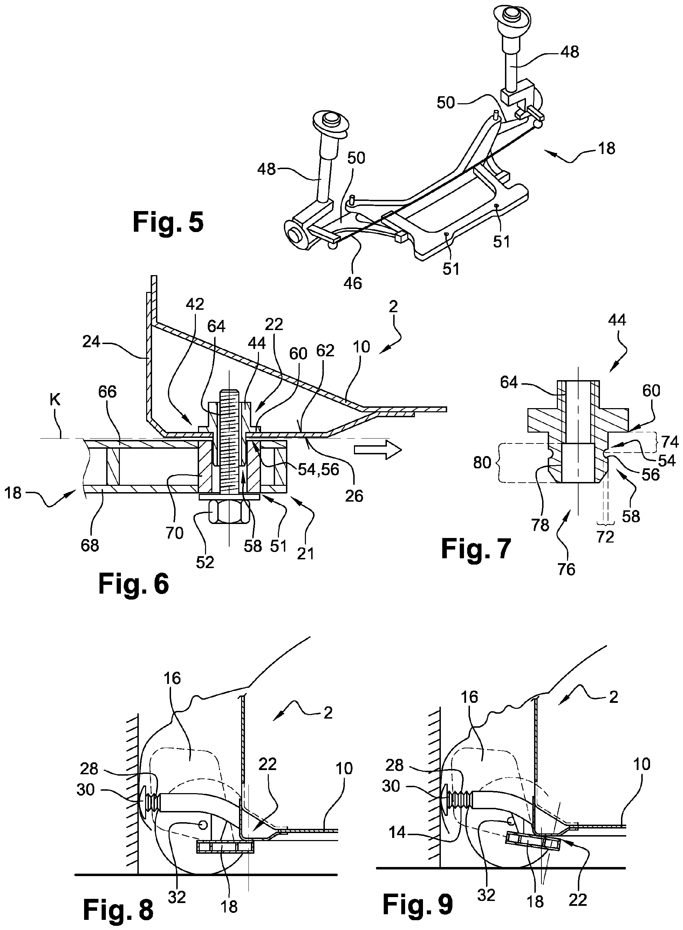

Les figures 4 et 5 précisent succinctement l'agencement des éléments structurels compris dans le compartiment avant du véhicule de manière à appréhender le phénomène d'augmentation de la raideur de la structure avant en cours de choc, et ce avant d'aborder plus bas les détails de réalisation de la fixation à rupture conforme à l'invention.

La figure 4 est une vue en perspective et simplifiée de l'ossature 36 de la structure 2 du véhicule. L'ossature 36 comprend les deux longerons 12 se prolongeant vers l'avant en deux brancards 14, se prolongeant eux-mêmes en profilés déformables 28. Le plancher (non représenté) repose sur les longerons 12 et réalise la liaison transversale entre eux. Les autres liaisons transversales sont réalisées par une poutre transversale intermédiaire 38, et enfin la traverse avant 30. On peut voir deux pièces de liaison 24 destinées à former une liaison entre le berceau et le plancher vus plus haut. Elles sont soudées au plancher, elles peuvent être aussi fixées aux longerons. La distinction de ces pièces de liaison 24 peut être intéressante pour la réalisation d'un plancher comprenant un tunnel en vue du passage d'un tuyau d'échappement, le tunnel du plancher pouvant être logé entre les pièces de liaison 24. On peut voir un orifice 42 et un pion 44 avec filetage dans chacune des pièces de liaison 24, les pions 44 sont conformes à l'invention et logés dans le prolongement des orifices 42, respectivement, et destinés à recevoir des vis de fixation du berceau moteur. Les pions 44 sont rigidement fixés aux pièces de liaison 24, ils peuvent être soudés. Les pièces de liaison 24 et/ou les pions 44 peuvent être fixées au plancher à l'occasion du ferrage de la caisse du véhicule.

La figure 4 présente en avant de l'ossature 36 deux moyens 46 fixés à gauche et à droite de chaque brancard 14 et destinés à la fixation des têtes d'amortisseur d'un train avant. Les lieux de fixation (non représentés) des cornes de berceau sur les brancards 14 peuvent être situés au niveau ou en arrière de ces moyens de fixation 46 des amortisseurs. Le groupe motopropulseur (non représenté) est fixé aux brancards 14 et logé dans l'espace délimité par les brancards 14, la poutre transversale 38 et la traverse avant 30.

La figure 5 est une vue en perspective et simplifiée du berceau moteur 18. Le berceau moteur est destiné à la fixation, entre autre, de la crémaillère de direction 46, des amortisseurs de suspension 48 ; on peut voir, en l'occurrence, les triangles de suspension 50 des roues, montés sur les côtés droit et gauche du berceau 18, respectivement. Les éléments d'entrainement (non représentés) du train avant sont aussi fixés au berceau moteur. Dans un mode préféré de réalisation de l'invention, les moyens de fixation du berceau 18 comprennent des pions de centrage destinés à positionner précisément le berceau lors de sa fixation au plancher. Ce centrage est nécessaire pour une bonne géométrie du train avant du véhicule ; en effet, celle-ci est définie par des angles caractéristiques permettant de satisfaire aux exigences de la conduite du véhicule comme la tenue de route, la stabilité ou la précision de la direction ; il est donc important que la position sur le berceau moteur 18 des moyens de fixation des éléments du groupe motopropulseur et/ou de la direction 46 soit parfaitement définie lors du montage du berceau 18 au plancher et aux brancards. On peut voir sur l'arrière du berceau 18 (en bas sur l'image) les orifices de centrage 51 du berceau 18 au plancher. La raideur du berceau moteur 18 participe également à la qualité de conduite du véhicule, en particulier pour la tenue de route dans les virages. Nous verrons plus bas comment cette raideur collabore également avec celle des autres éléments de la structure du véhicule en cas de choc frontal.

La figure 6 est une vue en coupe longitudinale de la structure 2 conforme à l'invention, au niveau des moyens de fixation arrière 22 entre le berceau moteur 18 et le plancher 10, ces moyens de fixation étant à rupture programmée. La partie arrière 21 du berceau 18 est fixée au plancher 10 de chaque côté, latéralement, dudit berceau 18. Les moyens de fixation arrière 22 du berceau moteur 18 peuvent être situés à une distance de l'axe longitudinale du véhicule comprise entre 5% et 50% de la largeur du plancher 10 du véhicule. Dans un mode préféré de réalisation, ils sont situés à une distance comprise entre 10% et 30% de cette largeur. La figure 6 présente l'une de ces fixations arrière réalisée en l'occurrence par l'intermédiaire d'une pièce de liaison 24 entre le berceau 18 et le plancher 10. La pièce de liaison 24, déjà présentée en relation avec les figures 3 et 4, favorise le déplacement vers l'arrière du berceau 18 au moment de la rupture des moyens de fixation 22. Le déplacement arrière du berceau 18 lors de cette rupture est symbolisé par une flèche sur l'image.

La figure 6 est une vue semi détaillée des moyens de fixation arrière 22 à rupture programmée conforme à l'invention. Les moyens de fixation à rupture 22 sont du type vis-écrou, ils comprennent une vis 52 et un pion 44 avec un filetage intérieur. Ils s'étendent essentiellement verticalement et comprennent une ou plusieurs zones d'affaiblissement 54 apte(s) à favoriser une rupture en cisaillement. Les zones d'affaiblissement 54 peuvent se situer dans une direction verticale au niveau du plan K de liaison entre la face inférieure 26 du plancher 10 ou de la pièce de liaison 24 et la face supérieure du berceau 18. La ou les zone(s) d'affaiblissement 54 des moyens de fixation à rupture 22 peut/peuvent comprendre une gorge circulaire 56. Cette gorge 56 peut s'étendre sur toute la circonférence des moyens de fixation a rupture 22.

Selon le mode de réalisation de l'invention, les moyens de fixation à rupture 22 comprennent au moins un pion 44 rigidement fixé au plancher 10 ou à la pièce de liaison 24 fixée au plancher 10. Ce pion 44 comprend une portion généralement circulaire 58 destinée au centrage du berceau 18. Cette portion 58 peut être fixée sous le plancher 10, elle peut aussi traverser un orifice 42 dans le plancher ou dans la pièce de liaison 24 fixée au plancher 10. Dans ce dernier cas, le pion 44 peut former un épaulement 60 en appui sur la face intérieure 62 du plancher 10 ou de la pièce de liaison 24. Dans ce même mode de réalisation, le pion 44 comprend un filetage intérieur 64, la vis 52 engageant avec ce filetage 64. La vis 52 peut comprendre une ou plusieurs zones d'affaiblissement 54, elle peut aussi, dans un autre mode de réalisation, ne pas comprendre de zones d'affaiblissement 54. En l'occurrence, la vis 52 représentée est vierge de telles zones d'affaiblissement 54.

La figure 6 est une vue simplifiée du berceau 18 au niveau des moyens de fixation 22. Le berceau 18 peut être réalisé par l'assemblage d'une coquille supérieure 66 et d'une coquille inférieure 68, formant le caisson du berceau 18. On peut voir une entretoise 70 logée dans le caisson du berceau, et débouchant sur les coquilles supérieure 66 et inférieure 68 en un orifice 51 ; le passage dans l'entretoise 70 est apte à recevoir le pion 44 par le dessus, précisément sa portion de centrage 58, et la vis de fixation 52 par le dessous.

La figure 6 présente un mode de réalisation ou le pion de centrage fileté 44 est solidaire de la caisse, la vis 52 pénétrant par le berceau 18. Un autre mode de réalisation peut consister en la réalisation d'un montage inversé, le pion de centrage fileté 44 solidaire du berceau 18, la vis 52 pénétrant par le plancher 10 ou la pièce de liaison 24.

La figure 7 est une vue en coupe du pion de centrage fileté 44 conforme à l'invention et dans un mode préféré de réalisation. La portion de centrage 58 du pion 44 comprend une gorge extérieure annulaire 56 formant une zone d'affaiblissement 54 des moyens de fixation à rupture 22. La gorge 56 peut avoir une largeur 72 et/ou une profondeur comprise entre 2mm et 5mm, elle peut être de forme arrondie. On peut également voir l'épaulement 60 du pion 44 destiné à être rigidement fixé au plancher ainsi que le filetage 64 destiné à recevoir la vis de fixation. La gorge 56 peut être à une distance 74 de l'épaulement 60 de façon à ce qu'après le montage du pion 44, la gorge 56 soit située sous la face inférieure du plancher ou de la pièce de liaison. Cette distance 74 peut être comprise entre 2mm et 7mm. Le passage de vis 76 peut comprendre une portion non filetée 78 sur une longueur 80 comprise entre 20% et 60% de la longueur du pion 44. Le pion 44 peut être en acier. La longueur de la portion non filetée du pion, ou le matériau du pion, ou enfin la distance de la gorge annulaire de l'épaulement sont des éléments, présentés à titre d'exemple, permettant le réglage du seuil de rupture du pion 44 en cas de choc avant. Ils ne sont pas limitatifs des paramètres de réglage du seuil de rupture des moyens de fixation en cas de rupture.

Les figures 8 et 9 illustrent l'évolution de la déformation de la structure d'un véhicule en cas de choc frontal à recouvrement total.

Pour absorber l'énergie cinétique d'un impact à l'avant d'un véhicule, la structure du véhicule a besoin d'une certaine raideur. Celle-ci se traduit en une force moyenne qui multipliée par la distance de déformation résulte en l'énergie absorbée. Lors du choc frontal contre un obstacle rigide, choc pour lequel la décélération du véhicule n'est pas filtrée, la raideur du véhicule même si elle doit être suffisamment élevée pour absorber l'énergie du choc sans entrainer de déformation excessive, ne peut atteindre de niveau trop élevé en particulier au moment où la décélération associée est excessive pour l'occupant du véhicule.

En phase initiale de choc une raideur importante de la structure peut être précieuse pour réduire de manière profitable la vitesse du véhicule, au moment où l'occupant n'est pas encore capturé par les moyens de retenue.

En phase ultérieure, l'occupant, en contact progressif avec des moyens de retenue, s'associe à la décélération du véhicule. Or la raideur de la structure avant du véhicule évolue généralement en cours de choc en augmentant par empilement de la traverse avant sur le groupe motopropulseur, puis sur la poutre intermédiaire ainsi que le berceau moteur et enfin le plancher. L'augmentation de la raideur de la structure en cours et particulièrement en fin de choc engendre une décélération croissante du véhicule qui est nocive pour l'occupant.

Les mesures de l'invention sont intéressantes en ce que la rupture des moyens de fixation entre le berceau et le plancher se déclenchent par la force transmise dans la structure avant au cours du choc. Cette force étant proportionnelle à la raideur de la structure, elle est un déclencheur approprié et infaillible de la rupture de la fixation au cours de l'augmentation de la raideur de la structure.

Le seuil de rupture de la fixation entre le berceau et le plancher conforme à l'invention peut être paramétré de telle sorte que la rupture de la fixation se réalise au moment où la raideur du véhicule atteint une valeur critique, valeur pour laquelle la décélération commence à être nocive pour l'occupant.

La figure 8 illustre la déformation de la structure 2 du véhicule conforme à l'invention à un stade intermédiaire de déformation après un choc frontal à recouvrement total du véhicule lancé à 50km/h contre un obstacle rigide. L'obstacle rigide est représenté schématiquement. On peut voir la compression des profilés déformables avant 28, ou « crashboxes ». Le recul de la traverse avant 30 n'a pas encore pleinement atteint le groupe motopropulseur 16. Le train avant 32 ainsi que le berceau moteur 18 n'ont pas encore non plus reculés. Les moyens de fixation arrière 22 entre le berceau 18 et le plancher 10 sont intacts. La raideur de la structure 2 à ce stade de la déformation provient principalement de celle des brancards 14 et des profilés déformables 28.

La figure 9 illustre la déformation de la structure 2 du véhicule conforme à l'invention à un stade final de déformation après un choc frontal à recouvrement total du véhicule lancé à 50km/h contre une paroi rigide. On peut voir le berceau 18 avec ses moyens de fixation arrière 22 au plancher 10 qui ont rompus. Le berceau 18 est déplacé vers l'arrière le long du plancher 10. On peut également voir que le groupe motopropulseur 16 ainsi que le train avant 32 ont reculé. La raideur de la structure 2 à ce stade de la déformation a largement augmenté par empilement de la traverse avant 30 sur le groupe motopropulseur 16, celui-ci étant très peu compressible et entrainant vers l'arrière les éléments qui y sont liés. Les brancards 14 ainsi que les profilés déformables 28 sont très déformés.

En cas de choc à 40%, ou entre 30% et 50% de recouvrement sur un obstacle déformable, l'augmentation de la raideur de la structure 2 du véhicule est relativement plus faible et ne déclenche pas la rupture de la fixation à rupture 22 conforme à l'invention. Plus précisément, l'obstacle déformable participe à l'absorption de l'énergie cinétique du choc. En effet, il représente la déformation théorique d'un bloc avant de véhicule en vue de simuler un choc avec un autre véhicule. Lors d'un choc à 64km/h, l'énergie cinétique à absorber, qui est proportionnelle au carré de la vitesse, est plus de 1.6 fois supérieure à celle à absorber lors d'un choc à 50km/h. Le choc à plus haute vitesse étant en l'occurrence contre un obstacle déformable, cette énergie supplémentaire peut être absorbée grâce à la déformation de l'obstacle, qui réduit d'autant l'intrusion dans le véhicule.

Outre la déformation de l'obstacle, le déport du véhicule pour un choc à recouvrement partiel participe également au filtrage de la décélération.

L'absorption de l'énergie d'un choc frontal à recouvrement partiel et à vitesse relativement plus élevée, peut être parallèlement traitée par la déformation décalée d'un seul côté du véhicule, par un des brancards, suivi d'un des trains avant, et partiellement du groupe motopropulseur et du berceau moteur. La raideur cumulée étant relativement plus faible lors d'un tel impact avant en comparaison avec un choc à recouvrement total, les moyens de fixation arrière du berceau au plancher sont relativement moins sollicités, de telle sorte que l'effort dans la ou les fixations du berceau moteur au plancher reste en deçà de son seuil de rupture.

Le véhicule conforme à l'invention pallie ainsi de manière satisfaisante au problème d'augmentation excessive de la décélération en particulier en fin de choc frontal à recouvrement total et à 50km/h, la solution proposée étant appropriée et relativement infaillible par la simplicité de son concept, sa réalisation étant en outre économique.

## Revendications

1. Structure (2) de véhicule automobile, comprenant :
- un plancher (10) ;
- un berceau moteur (18) avec une partie arrière (21) fixée au plancher (10) via des moyens de fixation (22) ;
les moyens de fixation arrière (22) étant des moyens de fixation à rupture configurés pour rompre en cas d'impact frontal, permettant audit berceau (18) de se déplacer vers l'arrière le long dudit plancher (10), **caractérisée en ce que** les moyens de fixation à rupture (22) comprennent au moins un pion (44) rigidement fixé au plancher (10) ou à une pièce de liaison (24) fixée au plancher (10), ledit pion (44) comprenant une portion (58) généralement circulaire destinée au centrage du berceau (18), la portion de centrage (58) du pion (44) traversant préférentiellement un orifice (42) dans le plancher ou dans une pièce de liaison (24) fixée au plancher (10).

2. Structure (2) selon la revendication 1, **caractérisée en ce que** les moyens de fixation à rupture (22) sont du type vis-écrou, ils comprennent une vis (52) et un pion (44) avec un filetage intérieur.

3. Structure (2) selon l'une des revendications 1 et 2, **caractérisée en ce que** les moyens de fixation à rupture (22) s'étendent essentiellement verticalement et comprennent une ou plusieurs zones d'affaiblissement (54) apte(s) à favoriser une rupture en cisaillement.

4. Structure (2) selon la revendication 3, **caractérisée en ce que** la ou les zones d'affaiblissement (54) des moyens de fixation à rupture (22) comprend/comprennent une gorge circulaire (56), ladite gorge s'étendant préférentiellement sur toute la circonférence desdits moyens.

5. Structure (2) selon l'une des revendications précédentes, **caractérisée en ce que** la portion de centrage (58) du pion (44) comprend une gorge extérieure annulaire (56) formant une zone d'affaiblissement (54).

6. Structure (2) selon l'une des revendications précédentes, **caractérisée en ce que** le pion (44) forme un épaulement (60) en appui sur la face intérieure (62) du plancher (10) ou de la pièce de liaison (24).

7. Structure (2) selon l'une des revendications précédentes, **caractérisée en ce que** le pion (44) comprend un filetage intérieur (64), les moyens de fixation (22) comprenant également une vis (52) engageant avec ledit filetage (64), ladite vis (52) étant préférentiellement vierge de zone d'affaiblissement (54).

8. Structure (2) selon l'une des revendications 1 à 7 **caractérisée en ce que** la partie arrière (21) du berceau (18) est fixée au plancher (10) de chaque côté, latéralement, dudit berceau (18).

9. Véhicule automobile comprenant :
- une structure (2) avec un plancher (10) et un berceau moteur (18) fixé audit plancher (10) ;
- un groupe motopropulseur (16) fixé au berceau moteur (18) ;
**caractérisé en ce que** la structure (2) est conforme à l'une des revendication 1 à 8 les moyens de fixation à rupture (22) étant configurés pour rompre en cas de choc frontal à recouvrement total et à 50 km/h sur un obstacle fixe et pour ne pas rompre en cas de choc frontal à recouvrement compris entre 30% et 50% et à 64 km/h sur un obstacle déformable.

## Patentansprüche

1. Kraftfahrzeugstruktur (2), umfassend:
- einen Boden (10);
- eine Motoraufhängung (18) mit einem hinteren Teil (21), der über Befestigungsmittel (22) an dem Boden (10) befestigt ist;
wobei die hinteren Befestigungsmittel (22) Bruchbefestigungsmittel sind, die konfiguriert sind, um im Falle eines Frontalaufpralls abzubrechen, wobei sie es der Aufhängung (18) ermöglichen, sich entlang des Bodens (10) nach hinten zu bewegen, **dadurch gekennzeichnet, dass** die Bruchbefestigungsmittel (22) mindestens einen Stift (44) umfassen, der fest an dem Boden (10) oder an einem Verbindungsteil (24) befestigt ist, das an dem Boden (10) befestigt ist, wobei der Stift (44) einen im Wesentlichen kreisförmigen Abschnitt (58) umfasst, der zur Zentrierung der Aufhängung (18) bestimmt ist, wobei der Zentrierabschnitt (58) des Stiftes (44) vorzugsweise durch eine Öffnung (42) in dem Boden oder einem Verbindungsteil (24) hindurchgeht, das an dem Boden (10) befestigt ist.

2. Struktur (2) nach Anspruch 1, **dadurch gekennzeichnet, dass** die Bruchbefestigungsmittel (22) vom Schrauben/Mutter-Typ sind, wobei sie eine Schraube (52) und/oder einen Stift (44) mit einem Innengewinde umfassen.

3. Struktur (2) nach einem der Ansprüche 1 und 2, **dadurch gekennzeichnet, dass** die Bruchbefestigungsmittel (22) sich im Wesentlichen vertikal erstrecken und eine oder mehrere Schwächungsbereiche (54) umfassen, die dazu geeignet sind, einen Scherbruch zu begünstigen.

4. Struktur (2) nach Anspruch 3, **dadurch gekennzeichnet, dass** der oder die Schwächungsbereiche (54) der Bruchbefestigungsmittel (22) eine kreisförmige Nut (56) umfasst/umfassen, wobei sich die Nut vorzugsweise über den gesamten Umfang der Mittel erstreckt.

5. Struktur (2) nach einem der vorhergehenden Ansprüche, **dadurch gekennzeichnet, dass** der Zentrierabschnitt (58) des Stifts (44) eine ringförmige äußere Nut (56) umfasst, die einen Schwächungsbereich (54) bildet.

6. Struktur (2) nach einem der vorhergehenden Ansprüche, **dadurch gekennzeichnet, dass** der Stift (44) eine Schulter (60) bildet, die sich an der Innenseite (62) des Bodens (10) oder des Verbindungsteils (24) abstützt.

7. Struktur (2) nach einem der vorhergehenden Ansprüche, **dadurch gekennzeichnet, dass** der Stift (44) ein Innengewinde (64) umfasst, wobei die Befestigungsmittel (22) auch eine Schraube (52) umfassen, die mit dem Gewinde (64) in Eingriff steht, wobei die Schraube (52) vorzugsweise keinen Schwächungsbereich (54) hat.

8. Struktur (2) nach einem der Ansprüche 1 bis 7, **dadurch gekennzeichnet, dass** der hintere Abschnitt (21) der Aufhängung (18) an dem Boden (10) auf jeder Seite seitlich der Aufhängung (18) befestigt ist.

9. Kraftfahrzeug, umfassend:
- eine Struktur (2) mit einem Boden (10) und einer Motoraufhängung (18), die an dem Boden (10) befestigt ist;
- einen an der Motoraufhängung (18) befestigten Antriebsstrang (16);
**dadurch gekennzeichnet, dass** die Struktur (2) einem der Ansprüche 1 bis 8 entspricht, wobei die Bruchbefestigungsmittel (22) so konfiguriert sind, dass sie im Falle eines Frontaufpralls mit vollständiger Abdeckung und bei 50 km/h auf ein festes Hindernis brechen und im Falle eines Frontaufpralls, mit einer Abdeckung zwischen 30 % und 50 % und bei 64 km/h auf ein verformbares Hindernis nicht brechen.

## Claims

1. Motor vehicle structure (2), comprising:
- a floor (10);
- an engine cradle (18) with a rear part (21) attached to the floor (10) via attachment means (22);
the rear attachment means (22) being rupture attachment means configured to break in case of front impact, making it possible for said cradle (18) to be moved towards the rear along said floor (10), **characterised in that** the rupture attachment means (22) comprise at least one pin (44) rigidly attached to the floor (10) or to a connecting part (24) attached to the floor (10), said pin (44) comprising a generally circular portion (58) configured to centre the cradle (18), the portion for centring (58) the pin (44) preferably passing through an orifice (42) in the floor or in a connecting part (24) attached to the floor (10).

2. Structure (2) according to claim 1, **characterised in that** the rupture attachment means (22) are of the screw-nut type, they comprise a screw (52) and a pin (44) with an inner thread.

3. Structure (2) according to one of claims 1 and 2, **characterised in that** the rupture attachment means (22) extend mainly vertically and comprise one or more weakening zones (54) capable of encouraging a shearing rupture.

4. Structure (2) according to claim 3, **characterised in that** the weakening zone(s) (54) of the rupture attachment means (22) comprise(s) a circular recess (56), said recess extending preferably over the whole circumference of said means.

5. Structure (2) according to one of the preceding claims, **characterised in that** the portion for centring (58) the pin (44) comprises an outer annular recess (56) forming a weakening zone (54).

6. Structure (2) according to one of the preceding claims, **characterised in that** the pin (44) forms a shoulder (60) bearing on the inner face (62) of the floor (10) or the connecting part (24).

7. Structure (2) according to one of the preceding claims, **characterised in that** the pin (44) comprises an inner thread (64), the attachment means (22) also comprising a screw (52) engaging with said thread (64), said screw (52) being preferably free of any weakening zone (54).

8. Structure (2) according to one of claims 1 to 7, **characterised in that** the rear part (21) of the cradle (18) is attached to the floor (10) from each side, laterally, of said cradle (18).

9. Motor vehicle comprising:
- a structure (2) with a floor (10) and an engine cradle (18) attached to said floor (10);
- a drive train (16) attached to the engine cradle (18);
**characterised in that** the structure (2) conforms with one of claims 1 to 8, the rupture attachment means (22) being configured to break in case of frontal impact with total coverage and at 50km/h on a fixed obstacle and to not break in case of frontal impact with coverage of between 30% and 50% and at 64 km/h on a deformable obstacle.
